# FASCICULE DE BREVET EUROPEEN

(11) **EP 3 956 227 B1**
(45) Date de publication et mention de la délivrance du brevet: **27.11.2024**
(21) Numéro de dépôt: 20725788.2
(22) Date de dépôt: 10.04.2020
(51) Int. Cl.: B64D 41/00, B64D 47/00, H02J 4/00

(54) **PROCÉDE DE COMMANDE D'UN RÉSEAU D'ALIMENTATION ÉLECTRIQUE D'UN AÉRONEF**
STEUERUNGSVERFAHREN FÜR ELEKTRISCHE ENERGIEVERSORGUNG IN EINEM FLUGGERÄT
CONTROL METHOD FOR AIRCRAFT ELECTRIC POWER NETWORK

(30) Priorité: 17.04.2019 FR 1904095
(43) Date de publication de la demande: 23.02.2022
(73) Titulaire: Safran Helicopter Engines, 64510 Bordes (FR)
(72) Inventeur: BARACCO, Thomas, 77550 MOISSY-CRAMAYEL (FR); KLONOWSKI, Thomas, 77550 MOISSY-CRAMAYEL (FR); POUMAREDE, Vincent, 77550 MOISSY-CRAMAYEL (FR)
(74) Mandataire: Gevers & Orès
(86) Numéro de dépôt international: PCT/FR2020/000115
(87) Numéro de publication internationale: WO 2020/212655

(56) Documents cités:
- DE-A1- 102015 116 154
- FR-A1- 2 981 225
- US-A- 5 483 142
- US-A1- 2008 174 177

## Description

### Domaine technique de l'invention

La présente invention concerne le domaine de l'alimentation électrique d'un aéronef. Elle se rapporte à un procédé de commande d'un réseau d'alimentation en énergie électrique d'un aéronef.

La présente invention s'inscrit notamment dans le cadre d'architectures électriques intégrant des sources de puissance comprenant une turbine à gaz associée à une génératrice formant un turbogénérateur, et des charges ou consommateurs d'énergie électrique tels que des propulseurs électriques.

La présente invention ne vise pas d'aéronef particulier et peut être appliquée aussi bien à des aéronefs à voilure fixe qu'à des aéronefs à voilure tournante de type hélicoptère ou multicoptère.

### Arrière-plan technique

L'état de la technique représentatif est reproduit dans le document US-A1-2008/174177, et comprend en outre les documents DE-A1-10 2015 116 154, US-A-5 483 142 et FR-A1-2 981 225 A1.

De manière connue, la propulsion des aéronefs se fait aujourd'hui par le biais de turbines à gaz couplées mécaniquement à des éléments propulsifs, notamment un fan pour un turboréacteur double flux moderne, une hélice pour un turbopropulseur ou un rotor pour les turbomoteurs, particulièrement pour des turbomoteurs d'hélicoptère.

Il est connu de prévoir de coupler une turbomachine avec un générateur de courant électrique et un moteur électrique pour l'entraînement d'un propulseur formant ainsi un système propulsif.

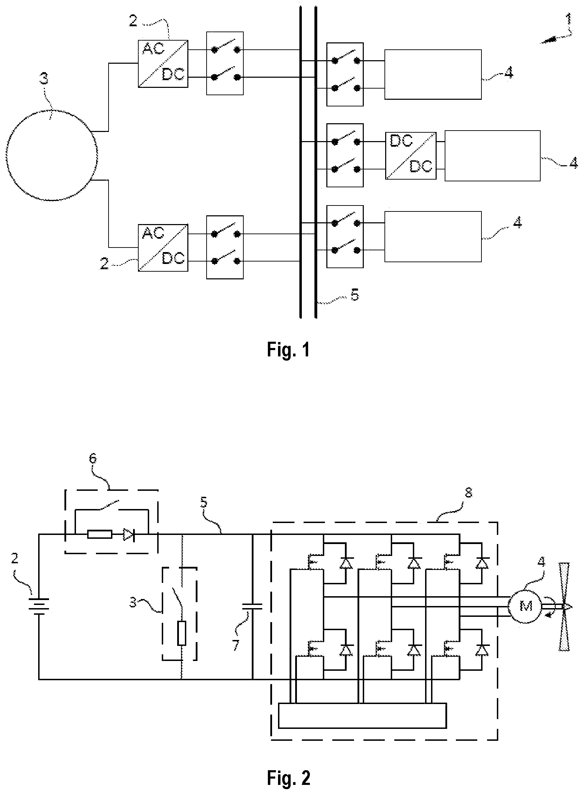

Ainsi, en référence à la figure 1, il a été proposé un réseau d'alimentation électrique 1 à Courant Continu Haute Tension (CCHT ou HVDC pour *High Voltage Direct Current* en langue anglaise) présentant au moins un redresseur 2 en sortie d'une génératrice 3 à courant alternatif suivi d'une pluralité de charges électriques 4 à alimenter (comprenant par exemple un onduleur en entrée d'un moteur électrique, afin de délivrer en sortie de l'onduleur un courant alternatif pour l'alimentation électrique du moteur électrique) le au moins un redresseur 2 et les charges électriques 4 étant connectées sur un bus de distribution 5.

Pour une telle architecture électrique, le nombre de sources de puissance énergétiques et de charges électriques à alimenter est connu, de sorte que la principale fonction d'un tel réseau d'alimentation électrique est de garantir le niveau de tension adéquat sur le réseau d'alimentation électrique HVDC et de fournir la puissance nécessaire quelle que soit la demande des charges électriques à alimenter. Les sources de puissance énergétiques et les charges électriques à alimenter sont connectées sur un bus de distribution HVDC.

De tels bus de distribution comportent des condensateurs afin de filtrer la tension fournie aux différentes charges électriques connectées au bus de distribution et notamment aux convertisseurs. Ces condensateurs doivent donc être préalablement chargés (autrement dit ces condensateurs doivent disposer d'un niveau initial d'énergie électrostatique suffisant) avant une mise sous tension du réseau d'alimentation électrique (c'est-à-dire avant que les sources de puissance énergétiques n'appliquent une tension), afin d'éviter de casser ces condensateurs ou des systèmes connectés à ces mêmes condensateurs, rendant inutilisable le réseau d'alimentation électrique HVDC. En effet, une mise sous tension brutale d'un condensateur déchargé revient à créer un courant de court-circuit pouvant causer des dommages importants.

Ainsi, en référence à la figure 2, il a été proposé d'utiliser un circuit résistif de pré-charge 6 annexe relié aux bornes d'un condensateur 7 d'un bus de distribution 5 afin de le pré-charger en énergie électrique depuis une source de tension continue 2, par exemple une batterie ou un redresseur à diodes, avant la mise sous tension de l'onduleur 8 qui pilote le moteur électrique 4 . Ce circuit de pré-charge 6 permet de contrôler une montée en tension pour limiter les courants dans le condensateur 7 grâce à une résistance, qui est ensuite court-circuitée par un interrupteur de puissance en fonctionnement normal, une fois la précharge terminée.

De plus, lors de la mise hors tension du bus de distribution 5, un circuit de décharge 3 mettant en oeuvre des résistances ainsi qu'un interrupteur de puissance est utilisé en parallèle du bus de distribution 5 afin d'assurer la sécurité du réseau électrique, notamment en cas d'intervention humaine par exemple pour des travaux de maintenance. Ce circuit de décharge permet d'assurer la décharge du condensateur 7 afin d'évacuer l'énergie stockée dans le condensateur 7 sous forme d'effet Joule dans la résistance du circuit de décharge, jusqu'à atteindre un certain seuil de tension acceptable.

Un inconvénient de ces circuits de pré-charge et de décharge du condensateur 7 est qu'ils sont embarqués dans l'aéronef alors qu'ils ne sont pas utilisés pendant les phases de vol de l'aéronef de sorte qu'ils constituent un poids supplémentaire embarqué inutile dans l'aéronef. Or, un but recherché pour améliorer les performances aérodynamique est de réduire le plus possible le poids embarqué.

Des solutions ont été proposées permettant de ne pas embarquer dans l'aéronef les circuits de pré-charge et de décharge. Ces solutions comprennent des systèmes dédiés non destinés à être embarqués dans l'aéronef mais à rester au sol mais nécessitent toutefois un dispositif de raccordement au bus de distribution de sorte que l'emport dans l'aéronef d'une interface de raccordement et de ses connectiques demeure toujours nécessaire.

Un but de la présente invention est de fournir une solution simple et efficace aux inconvénients susmentionnés.

### Résumé de l'invention

A cet effet, l'invention concerne un procédé de commande d'un réseau d'alimentation électrique d'un aéronef comprenant :
- au moins une génératrice d'un turboalternateur de l'aéronef adaptée pour fournir une source d'énergie électrique à partir d'une turbine à gaz et comprenant au moins un stator associé à un redresseur,
- au moins un bus de distribution comprenant au moins un condensateur,
- au moins un moteur électrique à alimenter associé à un onduleur, et
- au moins un moyen de stockage d'énergie,

le procédé comprenant les étapes de :
   - pré-charge du au moins un condensateur en mode de fonctionnement normal avant une mise sous tension du réseau d'alimentation électrique lorsque le au moins un condensateur est déchargé et que la turbine à gaz est disponible, et
   - pré-charge du au moins un condensateur en mode de fonctionnement en défaut avant une mise sous tension du réseau d'alimentation électrique lorsque le au moins un condensateur est déchargé et que la turbine à gaz n'est pas disponible,
caractérisé en ce qu'il comprend en outre une étape de :
   - décharge du au moins un condensateur en fin d'utilisation du réseau d'alimentation électrique lorsque le au moins un condensateur est chargé, et en ce que, en mode de fonctionnement en défaut, l'étape de pré-charge du au moins un condensateur est réalisée en modifiant la force électromotrice du au moins un moteur électrique et en commandant l'onduleur associé de sorte à transformer une énergie cinétique du moteur électrique en énergie électrique.

Avantageusement, en mode de fonctionnement normal, l'étape de pré-charge du au moins un condensateur est réalisée par la mise en rotation de la turbine à gaz jusqu'à ce qu'une tension de la génératrice atteigne une tension de seuil prédéterminée, la turbine étant alors en régime nominal.

Selon un exemple de réalisation intéressant, la pré-charge du au moins un condensateur est réalisée au moyen d'un pont de diode du redresseur. Ainsi, la pré-charge se fait en utilisant les éléments déjà présents sur le réseau, sans nécessiter de circuit dédié.

De préférence et avantageusement, la mise sous tension du réseau d'alimentation électrique se fait lorsque le au moins un condensateur est pré-chargé.

De préférence et avantageusement, lors de la mise sous tension, la tension du bus de distribution est adaptée à la tension à vide du au moins un stockeur électrique de sorte à éviter la génération de pics de courants de circulation.

Avantageusement, en mode de fonctionnement en défaut, l'étape de pré-charge du au moins un condensateur est réalisée en modifiant la force électromotrice du au moins un moteur électrique et en commandant l'onduleur associé de sorte à transformer une énergie cinétique du moteur électrique en énergie électrique.

Avantageusement, l'étape de décharge est réalisée par dissipation de l'énergie électrique du au moins un condensateur au moyen de l'impédance du réseau d'alimentation électrique.

Selon un exemple de mise en oeuvre, la dissipation de l'énergie électrique du au moins un condensateur est obtenue en reliant, en série, des résistances statoriques, via la commande des convertisseurs, du au moins un moteur électrique et de la au moins une génératrice.

De préférence et avantageusement l'étape de pré-charge du au moins un condensateur en mode de fonctionnement en défaut comporte une étape préliminaire de déconnexion du au moins un stockeur électrique. En cas de présence d'un convertisseur de courant continu en courant continu (DC/DC) commandable de type buck/boost entre le stockeur tampon, c'est-à-dire la batterie, et le condensateur, il est aussi possible de contrôler l'injection de courant, c'est à dire la montée en tension aux bornes du condensateur (non représenté), assurant aussi la fonction de précharge du bus HVDC.

Le procédé de commande selon l'invention permet d'assurer, indépendamment, les fonctions de :
- pré-charge des condensateurs en mode de fonctionnement normal, avant une mise sous tension initiale du réseau, en utilisant la mise en rotation de la turbine à gaz ;
- décharge des condensateurs en fin d'utilisation du réseau, en utilisant l'impédance du réseau pour dissiper l'énergie stockée dans le condensateur pour assurer la sécurité du réseau et du personnel amené à intervenir sur le réseau ;
- pré-charge des condensateurs à la suite d'une reconfiguration du réseau, en utilisant l'énergie cinétique inertielle induite par la rotation des rotors des moteurs électriques, en vol.

Ainsi, le procédé de commande selon invention permet de s'affranchir des circuits de pré-charge et de décharge dédiés du condensateur afin de réduire la masse embarquée dans l'aéronef et améliorer le rendement aérodynamique de de l'aéronef, tout en assurant les fonctions de charge et de décharge nécessaire soit par pré-requis pour le bon fonctionnement de l'aéronef, soit pour des raisons de sécurité.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1, déjà discutée, illustre un exemple de réseau électrique HVDC comprenant une pluralité de charges électriques connectées à un bus de distribution ;
[Fig. 2] La figure 2, déjà discutée, illustre un réseau électrique HVDC selon l'art antérieur comprenant un circuit de pré-charge, ainsi qu'un circuit de décharge ;
[Fig. 3] La figure 3 illustre un réseau électrique HVDC sans circuit de pré-charge, ni de décharge dédié ;
[Fig. 4a] La figure 4a est un diagramme temporel illustrant le profil de montrée en régime de la rotation d'une turbine d'aéronef ;
[Fig. 4b] La figure 4b est un diagramme temporel illustrant l'évolution de la tension de sortie du redresseur ;
[Fig. 5] La figure 5 illustre le transfert d'énergie électrique de la génératrice vers les condensateurs du réseau HVDC lors de l'étape de pré-charge en mode de fonctionnement normal ;
[Fig. 6] La figure 6 illustre la nature des sources et impédances vues par le bus de distribution du réseau HVDC avant l'étape de décharge des condensateurs ;
[Fig. 7] La figure 7 illustre le transfert d'énergie capacitive vers les résistances statoriques du réseau HVDC lors de l'étape de décharge des condensateurs ; [Fig. 8] La figure 8 illustre l'étape de pré-charge en mode de fonctionnement en défaut.

### Description détaillée de l'invention

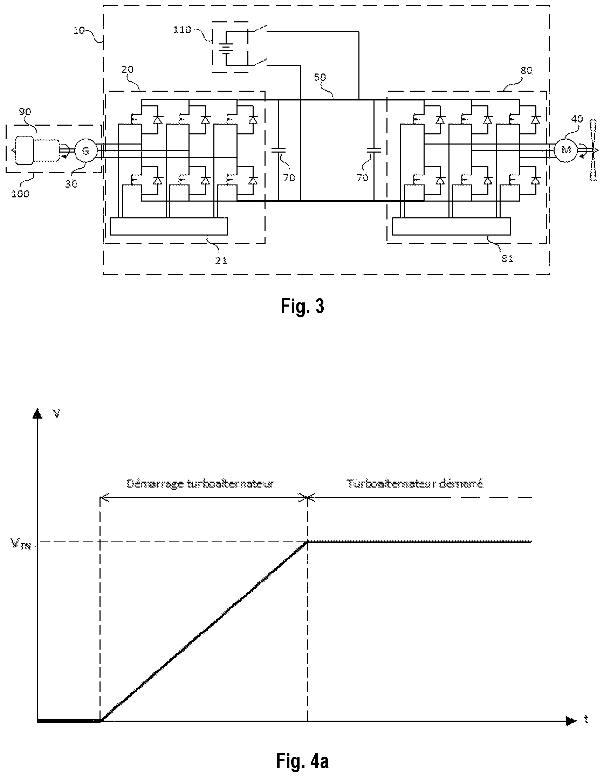

La figure 3 illustre un réseau électrique HVDC 10 d'un aéronef comprenant :
- une génératrice 30 d'un turboalternateur 100 de l'aéronef adaptée pour fournir une source d'énergie électrique à partir d'une turbine à gaz 90 et comprenant au moins un stator associé à un redresseur actif 20 comprenant un dispositif de contrôle 21,
- au moins un bus de distribution 50 comprenant une pluralité de condensateurs 70 (au moins un condensateur pour chaque convertisseur de puissance connecté au bus de distribution 50);
- au moins un moteur électrique 40 à alimenter, entraînant par exemple une hélice ou un rotor destiné à assurer de propulsion de l'aéronef, associé à un onduleur 80 comprenant un dispositif de contrôle 81, et
- au moins un moyen de stockage d'énergie 110 pouvant être une batterie, une super capacité...

Le procédé de commande selon l'invention comprend les étapes de :
- pré-charge des condensateurs 70 en mode de fonctionnement normal avant une mise sous tension du réseau d'alimentation électrique 10 lorsque les condensateurs 70 sont déchargés et que la turbine à gaz est disponible,
- pré-charge des condensateurs 70 en mode de fonctionnement en défaut avant une mise sous tension du réseau d'alimentation électrique 10 lorsque des condensateurs 70 sont déchargés et que la turbine à gaz n'est pas disponible, et
- décharge des condensateurs 70 en fin d'utilisation du réseau d'alimentation électrique 10 lorsque des condensateurs 70 sont chargés.

Plus précisément, en référence aux figures 4a à 5, pour l'étape de pré-charge des condensateurs 70 en mode de fonctionnement normal, initialement, des condensateurs 70 sont déchargés, la turbine à gaz est l'arrêt et aucun stockeurs électriques n'est connecté. La pré-charge des condensateurs 70 est réalisée par le démarrage et la mise en rotation de la turbine à gaz.

Ainsi, comme illustré à la figure 4a, la vitesse de rotation de la turbine à gaz (notée V) augmente progressivement pendant le démarrage jusqu'à atteindre une vitesse nominale V_{TN}. Cette première phase de montée en régime présente une durée (notée t) de l'ordre de plusieurs dizaines de secondes.

L'arbre de sortie de turbine à gaz étant directement relié au rotor de la génératrice 30, la vitesse de rotation de la génératrice 30 est donc proportionnelle à celle de la turbine à gaz. Selon un exemple de mise en oeuvre, un étage de réduction peut être disposé entre la turbine à gaz et la génératrice 30.

Dans une première phase de fonctionnement correspondant au démarrage de la turbine à gaz, le redresseur actif 20 n'étant pas commandé et fonctionnant en redresseur à diodes (passif), la tension en sortie du redresseur 20 est liée à la vitesse de rotation du rotor de la génératrice 30 et notamment, dans le cas d'une génératrice 30 de type machine synchrone à aimants, la tension en sortie du redresseur 20 est proportionnelle à la vitesse de rotation du rotor de la génératrice 30.

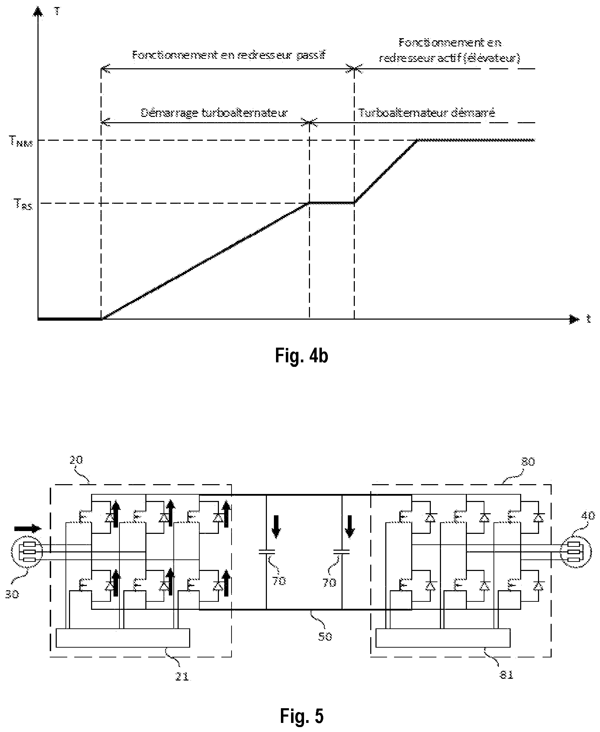

La figure 4b montre que la tension en sortie du redresseur 20 (notée T) augmente pendant une première phase correspondant au démarrage de la turbine à gaz, jusqu'à atteindre une valeur seuil T_{RS}. Lors de la première phase de montée en tension du réducteur 20, la tension du bus de distribution 50 (issue du redressement passif par les diodes anti parallèles du redresseur 20 de la tension alternative fournie par les phases statoriques de la génératrice 30) n'est pas suffisante pour permettre de contrôler directement la tension du bus de distribution.

Lorsque la tension fournie par le redresseur atteint la tension seuil T_{RS}, un dispositif de contrôle 21 du redresseur 20 en redresseur actif (élévateur) peut être utilisé pour réguler la tension du bus de distribution 50.

Dans une seconde phase de fonctionnement, la tension en sortie du redresseur 20 étant contrôlée par le dispositif de contrôle 21 et indépendante du régime de la turbine à gaz, le redresseur 20 piloté en redresseur actif permet alors de recharger les condensateurs 70 du bus de distribution 50 jusqu'à sa tension nominale T_{NM} (comme cela est représenté par les flèches de la figure 5).

Lors de cette mise sous tension du réseau électrique 10, il est opportun d'adapter la tension T_{NM} du bus de distribution 50 à la tension à vide du ou des stockeurs électriques 110 connectés au bus de distribution 50 de sorte à éviter la génération de pics de courants de circulation.

Lorsque le réseau électrique 10 n'est pas utilisé, la turbine à gaz 90 n'est plus en rotation et la génératrice 30 est coupée et l'organe de stockage électrique 110 isolé du bus de distribution 50, de sorte que la tension du réseau électrique 10 s'adapte à la tension imposée par les condensateurs 70. La batterie est déconnectée de manière à ce que les condensateurs puissent être déchargés. En particulier, l'énergie stockée dans une batterie est supérieure, par exemple mille fois supérieure, à celle stockée dans un condensateur.

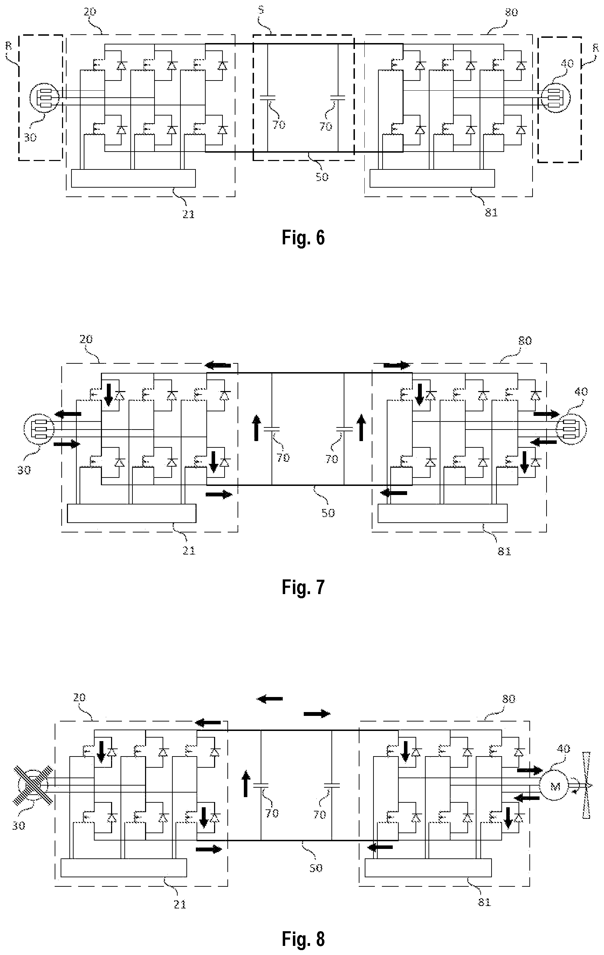

En référence à la figure 6, les condensateurs 70 deviennent une source S d'énergie à haute tension. En l'absence de système consommateur d'énergie connecté au bus de distribution 50, l'énergie électrostatique stockée dans les condensateurs 70 ne peut s'évacuer que par effet Joule, via l'autodécharge des condensateurs 70. Ce phénomène d'autodécharge est toutefois très lent, les condensateurs 70 étant conçus pour avoir le moins de pertes possibles : de plusieurs minutes à quelques heures. Il peut donc subsister sur le bus de distribution 50, longtemps après l'arrêt de tous les systèmes électriques qui y sont connectés (redresseur 20, onduleur 80 et dispositif de stockage 110), une tension résiduelle élevée. Or, lors d'une intervention sur le réseau électrique 10, par exemple pour maintenance, la tension du bus de distribution 50 doit être inférieure à un seuil prédéterminé, autrement dit, son niveau d'énergie électrostatique doit être inférieure à un seuil prédéterminé pour assurer la sécurité des intervenants.

Toujours en référence à la figure 6, la génératrice 30 et le moteur électrique 40 deviennent des résistances électriques R aptes à dissiper l'énergie stockée dans les condensateurs 70 par effet Joule lors de l'étape de décharge du procédé selon l'invention. Ainsi, les flèches de la figure 7 illustre la circulation de courant lors de cette étape de décharge, à savoir un transfert d'énergie capacitive depuis les condensateurs 70 vers les résistances statoriques R (la génératrice 30 et le moteur électrique 40).

Le redresseur 20 et l'onduleur 80 intègrent dans leur dispositif de commande respectif 21, 81, un mode spécifique de contrôle dédié à la décharge des condensateurs. D'un point de vu macroscopique cela équivaut à mettre en série une multitude de circuits de type RL, un circuit correspondant à une phase statorique de la machine électrique 30 ou 40.

Deux solutions peuvent être mises en place pour assurer la décharge :
- une première solution est de rendre un premier semi-conducteur dit haut (top en anglais) de l'onduleur passant, par exemple celui qui est connecté à la phase 1, et un second semi-conducteur dit bas (bottom en anglais) passant afin d'assurer la continuité électrique, par exemple celui qui est connecté à la phase 2 ou 3 ;
- une deuxième solution est d'utiliser le contrôle en courant de l'onduleur pour injecter un courant dans la machine électrique, avec une valeur suffisamment faible pour ne pas assurer la mise en rotation du rotor. Ce mode d'injection de courant permet une décharge suffisamment rapide jusqu'à que la tension soit trop faible pour assurer la contrôlabilté de l'onduleur.

Préalablement, si des stockeurs d'énergie 110 sont connectés sur le réseau électrique 10, il est opportun de les déconnecter avant cette étape de décharge des condensateurs 70.

Une mesure de la tension du bus de distribution 50 renseigne sur l'état de charge des condensateurs 70. Lorsque la tension des condensateurs 70 est inférieure à un seuil prédéterminé sécurisé pour une intervention humaine par exemple, les dispositifs de contrôle 21 et 81, respectivement du redresseur 20 et de l'onduleur 80 commande l'arrêt de l'étape de décharge en maintenant les convertisseurs 20, 80 à l'état bloqué.

En mode de fonctionnement par défaut, par exemple suite à une déconnection des sources énergétiques 20-30 (en cas de panne de l'alimentation, par exemple (turbine à gaz à l'arrêt ou dans un régime très ralenti, arrêt de la génératrice 30 à cause d'un risque de surchauffe, etc.), l'étape de pré-charge des condensateurs 70 se fait par transformation d'une énergie cinétique du moteur électrique 40 et de la charge entraînée (rotor ou hélice par exemple) en une énergie électrique. Cette étape est illustrée à la figure 8. Ainsi, le bloc comportant la génératrice 30 et le redresseur 40 est non disponible alors que le bloc comprenant les condensateurs 70 et le bus de distribution 50 nécessite de maintenir une tension.

Les moteurs électriques 40 étant quant à eux toujours en rotation, une énergie cinétique est toujours disponible dans les rotors.

L'onduleur 80 qui, par construction est similaire à un redresseur actif, le courant transitant par cet onduleur 80 est donc bidirectionnel. Ainsi, l'ensemble onduleur 80-moteur électrique 40 disposant d'une énergie cinétique est utilisé pour en convertir une partie en énergie électrique et maintenir la tension de bus de distribution, autrement dit maintenir le niveau de charge des condensateurs 70. Le dispositif de commande 81 de l'onduleur 80 peut, pour cela, soit introduire du défluxage, soit imposer une décélération du rotor du moteur électrique 40 afin de modifier la force électromotrice du moteur électrique 40 et donc transmettre de l'énergie électrique sur le bus de distribution 50 illustré par la flèche de la figure 8 et maintenir le niveau de charge énergétique des condensateurs 70.

Dans cette phase de fonctionnement en défaut, très peu d'énergie est disponible de sorte qu'il est nécessaire d'adapter la puissance consommée par les autres charges connectées sur le réseau électrique 10 afin de maintenir la charge des condensateurs 70.

Le procédé de commande selon l'invention peut être mis en oeuvre pour tous types de réseaux HVDC comprenant un ou plusieurs turbogénérateurs (turbine associée à une génératrice), un ou plusieurs redresseurs et par exemple avec la présence ou non de stockeurs électriques, montés en parallèles sur le bus de distribution 50.

## Revendications

1. Procédé de commande d'un réseau d'alimentation électrique (10) d'un aéronef comprenant :
- au moins une génératrice (30) d'un turboalternateur (100) de l'aéronef adaptée pour fournir une source d'énergie électrique à partir d'une turbine à gaz (110) et comprenant au moins un stator associé à un redresseur (20),
- au moins un bus de distribution (50) comprenant au moins un condensateur (70),
- au moins un moteur électrique (40) à alimenter associé à un onduleur (80), et
- au moins un moyen de stockage d'énergie (90),
le procédé comprenant les étapes de :
- pré-charge du au moins un condensateur (70) en mode de fonctionnement normal avant une mise sous tension du réseau d'alimentation électrique (10) lorsque le au moins un condensateur (70) est déchargé et que la turbine à gaz est disponible, et
- pré-charge du au moins un condensateur (70) en mode de fonctionnement en défaut avant une mise sous tension du réseau d'alimentation électrique (10) lorsque le au moins un condensateur (70) est déchargé et que la turbine à gaz n'est pas disponible,
**caractérisé en ce qu'**il comprend en outre une étape de :
- décharge du au moins un condensateur (70) en fin d'utilisation du réseau d'alimentation électrique (10) lorsque le au moins un condensateur (70) est chargé,
et **en ce que**, en mode de fonctionnement en défaut, l'étape de pré-charge du au moins un condensateur (70) est réalisée en modifiant la force électromotrice du au moins un moteur électrique (40) et en commandant l'onduleur (80) associé de sorte à transformer une énergie cinétique du moteur électrique (40) en énergie électrique.

2. Procédé selon la revendication précédente, dans lequel la pré-charge du au moins un condensateur (70) est réalisée au moyen d'un pont de diodes du redresseur (20).

3. Procédé selon l'une des revendications précédentes, **caractérisé en ce que** la mise sous tension du réseau d'alimentation électrique (10) se fait lorsque le au moins un condensateur (70) est pré-chargé.

4. Procédé selon la revendication précédente, **caractérisé en ce que** lors de la mise sous tension, la tension du bus de distribution (50) est adaptée à la tension à vide du au moins un stockeur électrique.

5. Procédé selon l'une quelconque des revendications précédentes, **caractérisé en ce que** l'étape de décharge est réalisée par dissipation de l'énergie électrique du au moins un condensateur (70) au moyen de l'impédance du réseau d'alimentation électrique (10).

6. Procédé selon la revendication précédente, **caractérisé en ce que** la dissipation de l'énergie électrique du au moins un condensateur (70) est obtenue en reliant, en série, des résistances statoriques (R) du au moins un moteur électrique (40) et de la au moins une génératrice (30).

7. Procédé selon la revendication précédente, **caractérisé en ce que** l'étape de pré-charge du au moins un condensateur (70) en mode de fonctionnement en défaut comporte une étape préliminaire de déconnexion du au moins un stockeur électrique.

8. Procédé selon la revendication 1, **caractérisé en ce que**, en mode de fonctionnement normal, l'étape de pré-charge du au moins un condensateur (70) est réalisée par la mise en rotation de la turbine à gaz (90) jusqu'à ce qu'une tension de la génératrice atteigne une tension de seuil (T_{RS}) prédéterminée, la turbine étant alors en régime nominal.

## Patentansprüche

1. Steuerungsverfahren für ein Stromversorgungsnetz (10) eines Luftfahrzeugs, umfassend:
- mindestens einen Generator (30) eines Wechselstromturbogenerators (100) des Luftfahrzeugs, der dazu angepasst ist, ausgehend von einer Gasturbine (110) eine elektrische Leistungsquelle zu liefern, und mindestens einen Stator umfasst, der einem Gleichrichter (20) zugeordnet ist,
- mindestens einen Verteilerbus (50), der mindestens einen Kondensator (70) umfasst,
- mindestens einen zu versorgenden Elektromotor (40), der einem Wechselrichter (80) zugeordnet ist; und
- mindestens ein Energiespeichermittel (90),
wobei das Verfahren die Schritte umfasst zum:
- Aufladen des mindestens einen Kondensators (70) in der normalen Funktionsweise im Voraus, bevor das Stromversorgungsnetz (10) unter Spannung gesetzt wird, wenn der mindestens eine Kondensator (70) entladen ist und die Gasturbine zur Verfügung steht, und
- Aufladen des mindestens einen Kondensators (70) in der Standardfunktionsweise im Voraus, bevor das Stromversorgungsnetz (10) unter Spannung gesetzt wird, wenn der mindestens eine Kondensator (70) entladen ist und die Gasturbine nicht zur Verfügung steht,
**dadurch gekennzeichnet, dass** es weiter einen Schritt umfasst zum:
- Entladen des mindestens einen Kondensators (70) am Ende der Verwendung des Stromversorgungsnetzes (10), wenn der mindestens eine Kondensator (70) aufgeladen ist,
und dadurch, dass in der Standardfunktionsweise der Schritt des Aufladens des mindestens einen Kondensators (70) im Voraus durchgeführt wird, indem die elektromotorische Kraft des mindestens einen Elektromotors (40) modifiziert wird und indem der zugeordnete Wechselrichter (80) derart gesteuert wird, dass eine kinetische Energie des Elektromotors (40) in elektrische Energie umgewandelt wird.

2. Verfahren nach dem vorstehenden Anspruch, wobei das Aufladen des mindestens einen Kondensators (70) im Voraus mittels einer Diodenbrücke des Gleichrichters (20) durchgeführt wird.

3. Verfahren nach einem der vorstehenden Ansprüche, **dadurch gekennzeichnet, dass** das elektrische Stromversorgungsnetz (10) unter Spannung gesetzt wird, wenn der mindestens eine Kondensator (70) im Voraus aufgeladen ist.

4. Verfahren nach dem vorstehenden Anspruch, **dadurch gekennzeichnet, dass** die Spannung des Verteilerbusses (50) beim Setzen unter Spannung an die Leerlaufspannung des mindestens einen Stromspeichers angepasst ist.

5. Verfahren nach einem der vorstehenden Ansprüche, **dadurch gekennzeichnet, dass** der Schritt des Entladens durch Dissipation der elektrischen Energie des mindestens einen Kondensators (70) mittels der Impedanz des Stromversorgungsnetzes (10) durchgeführt wird.

6. Verfahren nach dem vorstehenden Anspruch, **dadurch gekennzeichnet, dass** die Dissipation der elektrischen Energie des mindestens einen Kondensators (70) erzielt wird, indem die Statorwiderstände (R) des mindestens einen Elektromotors (40) und des mindestens einen Generators (30) in Reihe verbunden werden.

7. Verfahren nach dem vorstehenden Anspruch, **dadurch gekennzeichnet, dass** der Schritt des Aufladens des mindestens einen Kondensators (70) im Voraus in der Standardfunktionsweise einen vorläufigen Schritt des Trennens des mindestens einen Stromspeichers umfasst.

8. Verfahren nach Anspruch 1, **dadurch gekennzeichnet, dass** in der normalen Funktionsweise der Schritt des Aufladens des mindestens einen Kondensators (70) im Voraus dadurch durchgeführt wird, dass die Gasturbine (90) in Drehung versetzt wird, bis eine Spannung des Generators eine vorbestimmte Spannungsschwelle (T_{RS}) erreicht, während die Turbine im nominalen Betrieb ist.

## Claims

1. A method for controlling an electrical power supply network (10) for an aircraft comprising:
- at least one generator (30) of a turbo-generator (100) of the aircraft adapted to provide a source of electrical energy from a gas turbine (110) and comprising at least one stator associated with a rectifier (20),
- at least one distribution bus (50) comprising at least one capacitor (70),
- at least one electric motor (40) to be supplied associated with an inverter (80), and
- at least one energy storage means (90),
the method comprising the steps of :
- pre-charging said at least one capacitor (70) in normal operating mode prior to power-on the electrical power supply network (10) when said at least one capacitor (70) is discharged and the gas turbine is available, and
- precharging said at least one capacitor (70) in backup operating mode prior to power-on the electrical power supply network (10) when said at least one capacitor (70) is discharged and the gas turbine is not available,
**characterised in that** it further comprises a step of :
- discharging said at least one capacitor (70) at the end of use of the electrical power supply network (10) when said at least one capacitor (70) is charged,
and **in that**, in backup operating mode, the step of precharging said at least one capacitor (70) is carried out by modifying the electromotive force of said at least one electric motor (40) and by controlling the associated inverter (80) so as to transform a kinetic energy of the electric motor (40) into electrical energy.

2. The method according to the preceding claim, wherein the precharging of at least one capacitor (70) is carried out by means of a diode bridge of the rectifier (20).

3. The method according to one of the preceding claims, **characterized in that** the electrical power supply network (10) is powered-on when said at least one capacitor (70) is precharged.

4. The method according to the preceding claim, **characterized in that**, when the voltage is powered-on, the voltage of the distribution bus (50) is adapted to the no-load voltage of said at least one electrical storage device.

5. The method according to any one of the preceding claims, **characterized in that** the discharge step is carried out by dissipating the electrical energy of said at least one capacitor (70) by means of the impedance of the electrical power supply network (10).

6. The method according to the preceding claim, **characterized in that** the dissipation of the electrical energy of said at least one capacitor (70) is obtained by connecting, in series, stator resistors (R) of said at least one electric motor (40) and of said at least one generator (30).

7. The method according to the preceding claim, **characterized in that** the step of pre-charging said at least one capacitor (70) in the backup operating mode comprises a preliminary step of disconnecting said at least one electrical storage device.

8. The method according to the preceding claim, **characterised in that**, in normal operating mode, the step of precharging said at least one capacitor (70) is carried out by rotating the gas turbine (90) until a generator voltage reaches a predetermined threshold voltage (T_{RS}), the turbine then being at nominal speed.
